# EUROPEAN PATENT APPLICATION

(11) **EP 2 578 746 A1**
(43) Date of publication of application: **10.04.2013**
(21) Application number: 11184121.9
(22) Date of filing: 06.10.2011
(51) Int. Cl.: D06N 7/00, C08L 13/02, C08L 21/02, C09D 113/02, C09D 121/02, C09J 113/02, C09J 121/02

(54) **Carpet backing adhesive**

(71) Applicant: Styron Europe GmbH, 8810 Horgen (CH)
(72) Inventor: Salminen, Pekka Johannes, 8807 Freienbach (CH); De Vos, Hans, 8810 Horgen (CH)
(74) Representative: HOFFMANN EITLE

(57) **Abstract**

The present invention relates to a starch-based binder for carpet backings and carpets made therewith. The binder comprises water, a polymer and an oligomeric or polymeric starch hydrosylate compound.

## Description

The present invention relates to a binder, its use as an adhesive in carpet backings and carpets comprising said binder.

Methods and techniques for carpet construction are known in the art. A variety of types of carpets exist, including needle felt, tufted and non-tufted carpets. Many carpets including tufted carpets are composite structures that include yarn (known as a fiber bundle), a primary backing material having a face surface and a back surface, an adhesive backing material(often named precoat) and, optionally, a secondary backing material attached with a secondary adhesive.

Typically, in order to form the face surface of a tufted carpet, yarn is tufted through the primary backing material such that the longer length of each stitch extends through the face surface of the primary backing material. Typically, the primary backing material is made of a woven or non-woven material such as a thermoplastic polymer, most commonly polypropylene.

The face of a tufted carpet is generally manufactured using one of three methods. First, for a loop pile carpet, the yarn loops formed in the tufting process are left intact. Second, for a cut pile carpet, the yarn loops are cut, either during tufting or after, to produce a pile of yarn ends instead of loops. Third, some carpet styles include both loop and cut pile. One variety of this hybrid is referred to as tip-sheared carpet where loops of differing lengths are tufted followed by shearing the carpet at a height so as to produce a mix of uncut, partially cut, and completely cut loops. Alternatively, the tufting machine can be configured so as to cut only some of the loops, thereby leaving a pattern of cut and uncut loops. Whether it is loop, cut, or a hybrid, the yarn on the backside of the primary backing material typically comprises tight, unextended loops.

The combination of tufted yarn and a primary backing material without the application of a precoat adhesive backing material or a secondary backing material is referred to in the carpet industry as raw tufted carpet or greige goods. Greige goods become finished carpet with the application of a precoat adhesive backing material and an optional secondary backing material to the backside of the primary backing material. Finished tufted carpet can be prepared as broad-loomed carpet in rolls typically 2 or 4 meters wide. Alternatively, carpet can be prepared as carpet tiles, typically 0.04 to 1.3 m².

Alternatively, a carpet can be woven. Having the warp lengthwise as a set of yarn parallel to the selvage and the weft, or filling, running from selvage to selvage at perpendicular to the warp. Woven carpet can be produced as flat woven. An extra set of warp yarns can be included that forms the surface in a double woven pile fabric, such as Velvet, Plush and Frieze. Greige woven carpet is precoated with a binder to provide pile binding (tuft lock), stiffness and dimensional stability.

Alternatively, a carpet can be based on a nonwoven fabric. Loose fibers are converted into a coherent nonwoven fabric by needlepunching the web on a needle loom. The produced needlepunched, or needlefelt, greige is precoated with a binder to provide stiffness and dimensional stability.

The precoat adhesive backing material is typically applied to the backface of the primary backing material to affix the yarn to the primary backing material. In one method, the precoat backing material is applied by a pan applicator using a roller, a roll over a roller or a bed, or a knife (also known as a doctor blade) over a roller or a bed. When applied properly, the precoat backing material does not pass through the primary backing material.

The precoat and secondary adhesive backing material may be applied as a single coating or layer or as a multiple layer. The extent or tenacity to which the yarn is affixed is referred to as "tuft lock" or tuft bind strength. Carpets with sufficient tuft lock, typically in the order of 20 to 30N, exhibit good wear resistance and, as such, have longer service lives.

In order to have good performance characteristics, the precoat adhesive backing material should substantially penetrate the yarn (fiber bundle) exposed on the backside of the primary backing material and should substantially consolidate individual fibers within the yarn. Good penetration of the yarn and consolidation of the fibers leads to good abrasion resistance. Moreover, in addition to good tuft bind strength and abrasion resistance, the adhesive material preferably imparts or allows good flexibility to the carpet in order to facilitate installation of the carpet. With flexibility is meant the toughness of the carpet backing adhesive, when a flexural deformation is applied to the carpet the backing adhesive does not immediately break.

Carpet, being a building material, further has requirements with respect to flammability. Depending the final application these requirements can be more stringent. The flammability of carpet is a function of carpet construction, fibre type, adhesive polymer type, filler- and additives types used. A method to describe the flammability of the adhesive polymer type is the limiting oxygen index (ASTM D2863). LOI is the minimum concentration of oxygen that will just support flaming combustion in a flowing mixture of oxygen and nitrogen, when a specimen is ignited at the top. The oxygen concentration is adjusted until the specimen just supports combustion. The concentration reported is the volume percent oxygen. The adhesive material preferably imparts high LOI to meet FR requirements without or low amounts of flame retardant additives.

Exhibition carpet has a relative short lifetime and is often simple in construction. For instance a lightly tufted carpet with a thin precoat or (low density) needlefelt carpet. Such carpet is wasted as the precoat cannot be separated from the fibres. An adhesive coating that can be easily separated would be an advantage as this can allow the polymer fibres to be reused.

The secondary backing material is typically a lightweight scrim made of woven or non-woven material such as a thermoplastic polymer, most commonly polypropylene. The secondary backing material is optionally applied to the backside of the carpet onto the secondary adhesive backing material, primarily to provide enhanced dimensional stability to the carpet structure as well as to provide more surface area for the application of direct glue-down adhesives.

Alternative backing materials may include foam cushioning (e.g. foamed polyurethane) and pressure sensitive floor adhesives. Alternative backing materials may also be applied, for example, as webbing with enhanced surface area, to facilitate direct glue-down adhesive installations (e.g., in contract commercial carpeting, automobile carpet and airplane carpet where the need for cushioning is often times minimal). Alternative backing materials can also be optionally applied to enhance barrier protection with respect to moisture, insects, and foodstuffs, as well as to provide or enhance fire suppression, thermal insulation, and sound dampening properties of the carpet.

Known adhesive backing materials include curable latex, urethane or vinyl systems, with latex systems being the most common. Styrene butadiene rubbers (SBR) are the most common polymers used for latex adhesive backing materials.

Conventional latex adhesive backing systems can have certain drawbacks. As one important drawback, typical latex adhesive backing systems do not provide a moisture barrier. Another possible drawback, particularly with a carpet having polypropylene yarn and polypropylene primary and secondary backing materials, is the dissimilar polymer of latex systems along with the inorganic filler can reduce the recyclability of the carpet. Additionally, the high molecular weights of latex systems can significantly reduce the recyclability.

Especially in view of the latter and a general trend towards renewable materials, there is an increased market demand for carpets on the basis of natural binders. Past attempts in this regard (cf. e.g. US 4,055,694) have proposed starch-containing binders for carpet backing adhesives. However, the prior art attempts to use such starch-containing binders have not been entirely successful. In particular, starch-containing binders tend to form rather brittle adhesive films if the starch loading is in the order of about 5 weight % based on the weight of the adhesive composition. The same is true for corn syrups used for this purpose (cf. e.g. US 4,368,282). It turns out that corn syrup loadings of 25% and higher, based on the weight of the adhesive composition, result in brittle films.

Another drawback of conventional binders is the low LOI, resulting in the need for flame retardants if flammability ratings have to be met. Flame retardants, while improving the flammability rating of a carpet, are economically disadvantageous, and it would be desirable to minimize the amount of flame retardant necessary while still retaining suitable flammability ratings. It is thus also an object of the present invention to reduce the flammability of the adhesives for carpet backings, evidenced by higher LOI, and provide a product that meets the above needs.

In the prior art, it was therefore not possible to satisfy all of the above needs at once and to provide a natural resource-based adhesive, which combines good tuft lock, durability, flexibility, recyclability and flammability. It is thus the object of the present invention to improve the known natural resource-based adhesives for carpet backings and provide a product that meets the above needs.

The solution found by the present inventors resides in a binder that comprises oligomeric and/or polymeric starch hydrolysates. An adhesive film cast from the binder has a Young's Modulus of less than 1 GPa and an elongation at break (or ultimate strain) of more than 20%. The binders of the present invention comprise high amounts of starch hydrolysates and at the same time they provide flexible adhesive films. Carpets made with the binders according to the present invention show good tuft lock, delamination strength, reduced flammability and durability. The present invention, thus, provides beneficial binders that can be used in adhesive compositions for carpet backings.

A "binder" in the sense of the present invention, is an aqueous dispersion or solution of a natural and/or synthetic polymer, such as an elastomer or a mixture thereof. The binder according to the present invention comprises a polymer and a starch-derived component. The polymer used in the binder according to the present invention is preferably an elastomer.

The "adhesive" in the sense of the present invention are the solids contained in the binder, i.e. the binder without water.

Useful elastomers are flexible crosslinkable and carboxylic acid group-containing polymers or mixtures thereof. Examples of such polymers are the copolymers of butadiene, isoprene, 2,3-dimethyl butadiene and other dienes of 4 to 6 carbon atoms with a copolymerizable unsaturated acid such as acrylic acid, methacrylic acid, ethacrylic acid, sorbic acid, maleic acid, fumaric acid, itaconic acid, vinyl benzoic acid, α-chloro acrylic acid, crotonic acid and the like as well as mixtures thereof.

They may also be copolymerized with the diene and acid monomer of one or more other copolymerizable monomers such as styrene, α-methyl styrene, vinyl toluene, acrylonitrile, methacrylonitrile, methylacrylate, ethylacrylate, butyl acrylate, ethyl hexylacrylate, methyl methacrylate, hydroxy ethyl acrylate, hydroxy ethyl methacrylate, acrylamide, methacrylamide, and the like and mixture thereof. Vinyl acetate and vinyl acetate/ethylene mixtures may also be used. The resulting polymers may be subjected to hydrolysis so as to obtain the respective vinyl alcohol polymers.

Still other polymers can be used such as the copolymers of one or more of the above acrylates and one or more of the above acrylic acids. The addition of the third, fourth, etc. monomer will be determined by the need for compatibility with the carpet materials, stiffness, and the toughness, strength, water and solvent resistance and so forth desired.

Preferred copolymers to use are flexible carboxylated butadiene styrene copolymers, e.g., copolymers of butadiene, styrene and at least one acid selected from the group consisting of acrylic, methacrylic, fumaric, maleic, and itaconic acids. These copolymers may be prepared in aqueous emulsion systems using conventional emulsifiers, chain transfer agents, antioxidants, short-stop agents, free radical catalysts and so forth as well known to the art. Methods for making these polymers are disclosed in U.S. Pat. Nos. 2,604,668; 2,669,550; 2,710,292; 2,724,707; 2,849,426; 2,868,754; 3,392,048; 3,404,116; 3,409,569; and 3,468,833. Please, also, see "Rubber World," September, 1954, pages 748 to 788 and "Industrial And Engineering Chemistry," May, 1955, pages 1006 to 1012. The aqueous adhesive can have a solids content of from about 30 to 60%, have a pH of about 7.5 to 11.5 and have a Brookfield viscosity of about 50-350 (LVF Model No. 4 Spindle at 50 rpm) cPs at 25°C.

These carboxylated copolymers are readily crosslinked by means of polyvalent metal compounds such as alkalimetal or ammonium hydroxides, the oxides of zinc, magnesium, cadmium, calcium, titanium, aluminium, barium, strontium, cobalt, tin iron, lead and others. The chloride, sulphate, nitrate, acetate, and formate salts of Ca, Mg, Ba, Sn, Fe, Sr, Ni, Zn and Co may also be used as crosslinking agents. Metal hydroxides can be used such as the hydroxides of calcium, cadmium, zinc, barium and aluminium. Sodium or alkalimetal aluminate is also a crosslinking agent. Polyamines can also be used as crosslinking agents such as ethylene diamine, 1,3-diaminobutane, diethylenetriamine, and the like. Other crosslinking agents can be used such as the epoxides, amino-formaldehyde resins, phenol-formaldehyde resins, ureaformaldehyde resins, urea-melamine resins and so forth. Additionally, sulphur curing systems can be added to the copolymer composition if it contains sulphur curable unsaturation; however, such requires extended curing times at elevated temperatures and may not be too desirable.

If a pigment or filler such as limestone, calcium carbonate, is employed, it will furnish sufficient divalent metallic ions during the curing step to provide the necessary crosslinking between the COOH groups of the copolymer. Other divalent metal carbonates may likewise be used. Mixtures of the various curing or crosslinking agents can be used.

The oligomeric or polymeric starch hydrolysates as used in the present invention are compounds and mixtures obtained by partially hydrolyzing starch, e.g. by degradation based on acid, alkaline, thermal and/or enzymatic conversion. The degradation is continued until the below reported film properties are achieved. Suitable materials can have a dextrose equivalent of 1 to 30 or 1 to 20 or even lower.

A preferred starch hydrolysate product is dextrin and in particular low molecular weight dextrin. Low molecular weight dextrin is dextrin has a dextrose equivalent of 1 to 30, preferably 1 to 20 or even 1 to 13.

In a most preferred embodiment, the starch or oligomeric or polymeric starch hydrolysates including dextrins used in the binder according to the present invention are subjected to cooking with a strong base. A strong base is for instance NaOH, KOH or the like. The strong base can be used in concentrations of 5 mol per litre or less, such as 2 or 1 mol per litre or less such as 0.5 mol per litre. To prepare the starch hydrolysate for use in the binder according to the present invention, the starch or starch derived material is heated in an aqueous solution of a strong base. For instance, it may be held at a temperature between 80 and 100°C such as 95°C for 20 to 120 min, preferably 20 to 60 min., e.g. around 30 min. Cooking times for higher molecular weight starting materials tend to be longer than those for lower molecular weight starting materials. The resulting solution can then be neutralised with acid and the resulting starch derivate can be used in the binder according to the present invention.

The binder according to the present invention contains 20 to 80, such as 40 to 75, preferably 45 to 70 weight percent dry solids.

The starch hydrolysate may preferably be used in an amount of 10 weight % or more, 15 weight % or more, 20 weight % or more, 25 weight % or more or 30 weight % or more based on the weight of the dry solids in the binder. Preferably, the starch hydrolysate corresponds is used in an amount of less than 50 weight % or less than 45 weight % such as 40 weight %. Preferred ranges are 10 to 50, 15 to 50, 20 to 50, 25 to 50 and 30 to 50 weight %, whereby 25, 30, 32, 33 or 38 to 40 weight percent based on the weight of the dry solids in the binder.

The binder may preferably contain up to 90, or preferably up to 70, preferably 5-50, more preferably 10-40, such as 20-40 weight-% polymer based on the weight of the dry solids in the binder.

The preparation of the binder according to the present invention is not particularly limited. That is, the starch hydrolysate may be added to an existing polymer binder as such or dispersed in water. The polymer may also be added to a mixture of the starch hydrolysate in water, or both the starch hydrolysate and the polymer as well as other components may be mixed with water in any order or combination.

In addition, the aqueous carboxylated copolymeric adhesive composition can contain the usual antioxidants, dispersing agents, clay, defoamers, TiO₂, thickeners, fire retardants, bacteriostats, pigments or colorants, surfactants, alumina, alumina hydrate, UV absorbers, ammonia cut caesein, and so forth.

In addition to the foregoing components, the composition of the invention may also contain various supplemental plasticizers. The principal purpose of such material is to adjust the degree to which the cured films produced from the composition are plasticized. These are solvent-type plasticizers, i.e., rather high boiling, normally liquid organic compounds which are chemically inert toward the polymer, in which the copolymer is at least partially soluble and will therefore be readily softened by contact with the plasticizer. Appropriate plasticizers of this type include naphthenic and aromatic petroleum oils and synthetic organic compounds such as ester-type plasticizers and liquid polymers. Suitable low molecular weight polyols are glycerine, methyl propyl glycol (MPG), dipropyl glycol (DPG), methyl ethyl glycol (MEG), diethylene glycol (DEG) and the like.

Suitable ester-type plasticizers include the following: hexylene glycol, dimethyl phthalate, dibutyl phthalate, chlorinated diphenyls, tributyl phosphate, di-carbitol phthalate, dibutoxy-glycol phthalate, dimethoxy-glycol phthalate, butyl phthalyl butyl glycolate, methyl phthalyl ethyl glycolate, triglycol di-2-ethylbutyrate, triglycol di-2-ethylhexoate and phosphate-type plasticizers such as tributoxyethyl, tricreasyl, triphenyl, diphenyl octyl, diphenyl cresyl, tris-dichloropropyl, trischloroethyl, tris-dibromopropyl, and tris-dichloroisopropyl phosphates. Low molecular weight water-insoluble polyalkylene glycols, e.g. polypropylene glycols, are also suitable plasticizers. Also, liquid polymers may be used as plasticizers, for instance, liquid polybutylenes, liquid polybutadienes and liquid polyesters. Other material such as antioxidants, defoamers, bactericides, emulsifiers, thickeners, dispersants and the like may be used in the present composition.

The binder according to the present invention may contain 50% or less plasticiser. Preferred embodiments contain 30% or less, such as 15% or less, 10% or less 5% or less or even as little as 1% or less such as 0.5 or 0.1% or less. In a most preferred embodiment, the binder does not contain a plasticiser (percentages based on the total weight of the binder).

A carpet backing formulation is a composition comprising the a binder. It is adjusted and formulated so as to to meet specific product or processing needs of the carpet manufacturer. The carpet backing may e.g. contain in addition to the binder additives such as foaming agents, wetting agents, dispersants and fillers, flame retardants and anti static agents.

The Carpet backing formulation according to the present invention may contain other additives such as mineral fillers and the like. Examples of mineral fillers are limestone, talc, kaoline, Bariumsulfate and calcium carbonate.

The Carpet backing formulation may contain the filler in an amount of 0 to 1000 parts per hundred parts (pphp) of the dry binder solids, preferably 0 to 600 pphp, more preferably 0 to 400 pphp, especially if the carpet is a woven or needlefelt carpet.

In another preferred embodiment, the Carpet backing formulation according to the present invention contains the filler in an amount of 0 to 1000 parts per hundred parts dry binder solids, preferably 500 to 1000 pphp, more preferably 600 to 850 pphp, especially if it is used as precoat for a tufted carpet.

In another preferred embodiment, the Carpet backing formulation according to the present invention contains the filler in an amount of 0 to 1000 parts per hundred parts dry binder solids, preferably 200 to 500 pphp, more preferably 250 to 400 pphp, especially if it is used as a secondary adhesive for a tufted carpet.

The Carpet backing formulation can be used as such or frothed with air or other gas, which is nonreactive under spreading and curing conditions to form a foam containing about 50-98%, preferably 80 to 95% by weight of gas.

The binder when cast into an adhesive film has a Young's Modulus of 1 GPa or less. The Young's Modulus is a measure of the stiffness of a material, it can be experimentally determined from the slope of at the initial part of the Stress-strain curve created during a Tensile Test conducted on a sample of the material.

One can measure Young's Modulus as follows. The samples are stamped from a film and have dimension 100x10mm, thickness (preferably 0.2mm) is measured before measurement. The sample is clamped at both ends and the ends are pulled apart with a speed of 50 mm/min and the load and elongation (in percent of the original dimension) are measured until the sample breaks. The Young's Modulus is the slope of the initial part of the Stress-strain curve. The elongation at break is the elongation of the sample just before it breaks.

Preferably, the Young's Modulus of the binder according to the present invention is less than 0.8 GPa and preferably less than 0.5 GPa.

If it turns out that in a practical situation, the film does not meet the Young's Modulus and elongation requirements of the present invention, the skilled person can adjust these properties as needed. For instance, if the film is too stiff, the skilled person could cook the starch hydrolysate for a longer or an additional period of time, or he could use more Caustic in the cooking step or apply higher shear. Eventually he could also add plasticizer, but that is less preferential.

### Examples

In the examples, the following carboxylated styrene butadiene latexes were used.

| | | DL 510 | DL 520 | XZ 92227.01 |
|---|---|---|---|---|
| solids | % | 52 | 53 | 51 |
| bound styrene | % | 69 | 60.5 | 52.5 |
| Min. Film Forming T | °C | 30 | 8 | 2 |
| Young's modulus | MPa | 340 | 24 | 7 |
| Elongation at break | % | <1 | 340 | 635 |

Other products used are:
- STADEX® 235: Canary waxy Starch dextrin, highly converted, commercially available from Tate&Lyle
- MERIFILM® 104: Modified Corn Starch, commercially available from Tate&Lyle.
- St235-3: Starch hydrolysate St235-3 was prepared as follows: 300g water was loaded to a stainless steel jacketed vessel and then stirred mildly. 30g NaOH pellets were added and allowed to dissolve. Subsequently 450 grams Stadex 235 was added under stirring to make a dull brown liquid. The content was heated by driving steam through the jacket until the temperature reached 90-95°C, pH was measured to be 11.1, the mixture was stirred continuously for 30 minutes at this temperature and then it was cooled down while stirring until the temperature felt below 55°C. pH at this point was 9.8 and the content was neutralised with 11.6 grams citric acid to pH 6.7. Solids was 68.5% and the viscosity at 20°C was 7620 cPs.
- St235-9: Starch hydrolysate St2325-9 was prepared as follows: 300g water was loaded to a stainless steel jacketed vessel and then stirred mildly. NO NaOH pellets were added. Subsequently 550 grams Stadex 235 was added under stirring to make a dull brown liquid. The content was heated by driving steam through the jacket until the temperature reached 90-95°C, pH was measured to be 5.2, the mixture was stirred continuously for 30 minutes at this temperature and then it was cooled down while stirring until the temperature felt below 55°C. pH at this point was 4.8 and the content was not further neutralised. Solids was 70.3% and the viscosity at 20°C was 12860 cPs.
- Voranol® P1200: Propoxylated polyether, diol, Mw=1200, commercially available from The Dow Chemical Company.
- ML ATH: Aluminum Tri Hydrate, powder, available from Mouldlife, Suffolk, GB.
- DL510: Carboxylated styrene-butadiene latex with a solids content of 51.0%, available from STYRON Europe GmbH
- DL 520: Carboxylated styrene-butadiene latex with a solids content of 53.0%, available from STYRON Europe GmbH
- XZ92227.01: Carboxylated styrene-butadiene latex with a solids content of 51.0%, available from STYRON Europe GmbH
- DISPEX® N40: Acrylic copolymer dispersing agent for water borne coating, active content 40%, available from Ciba.
- POLYRON® 332: polyphosphate dispersing agent for water borne coating, active content 40%, available from BK Guilini.
- RX 018: sodium lauryl sulphate foaming agent, active content 30%, available from EOC Group.
- Emulsogen® SF8: di octyl sulfo succinate wetting agent, active content 50%, available from Clariant.
- CARBOCIA 80: Calcium carbonate (lime stone), active content 100%, available from Carbocia France.
- RX 810: acrylic thickener, active content 10%, available from EOC Group.

### Example 1

To test the mechanical properties of a film prepared with the binder according to the present invention, the inventors have casted films on a mylar foil, fixed with a scotch tape to a glass plate, using a calibration bar to spread the liquid dispersion with even thickness onto the mylar foil. The films are dried at 65°C overnight, and subsequently cured for 15 minutes at 100°C. The films were left in the oven to cool down before they were conditioned minimal 24 hours at 20°C and 50% RH.

Tensile measurements according to ASTM D-882 were done using an Instron 5900 and following parameters: specimen dimensions are 100x10x0.2mm, extension rate is 50mm/min. The strips were cast in from binders having the following composition set forth below.

The strips were fixed at both ends in the clamps of the measuring device. The clamps were pulled away from each other until a constant force of 0.1 N, the machine is zeroed and subsequently the clamps are pulled apart at a constant speed of 50 mm/min.

The maximum load, the tensile stress at maximum load, the tensile strength at break, the strain at break, the strain at maximum load and Young's Modulus were determined. The results were as follows:

| **Run** | **1** | **2** | **3** | **4** | **5** | **6** | **7** | **8** | **9** | **10** | **11** |
|---|---|---|---|---|---|---|---|---|---|---|---|
| | comp. | comp. | comp. | inv. | inv. | inv. | inv. | inv. | inv. | inv. | inv. |
| **DL510¹** | 100 | | | | | | | | | | |
| **DL520¹** | | 100 | | | | | | | | | |
| **XZ792227.01¹** | | | 100 | 90.9 | 83.3 | 76.9 | 71.4 | 90.9 | 83.3 | 76.9 | 71.4 |
| **ST235-3¹** | | | | 9.1 | 16.7 | 23.1 | 28.6 | | | | |
| **ST235-9¹** | | | | | | | | 9.1 | 16.7 | 23.1 | 28.6 |
| **Max Load[N]** | 46.2 | 20.3 | 7.1 | 10.0 | 11.9 | 10.5 | 13.6 | 8.2 | 5.2 | 7 | 5.4 |
| **stress at max load [N/mm²]** | 19.41 | 8.40 | 2.83 | 4.17 | 5.81 | 5.94 | 11.35 | 3.45 | 2.90 | 3.00 | 3.26 |
| **elongation at max load [%]** | 305 | 851 | 1245 | 1032 | 903 | 4 | 3 | 1078 | 718 | 737 | 284 |
| **T stress at break [N/mm²]** | 19.00 | 8.40 | 2.83 | 4.17 | 5.81 | 4.28 | 7.40 | 3.44 | 2.90 | 3.00 | 3.14 |
| **elongation at break [%]** | 451 | 852 | 1245 | 1032 | 903 | 326 | 15 | 1078 | 718 | 737 | 485 |
| **Young' s Modulus (MPa)** | 820 | 23 | 0.7 | 8.6 | 77 | 290 | 535 | 2.7 | 29 | 61 | 120 |

| | | | | | | | | | | | |
|---|---|---|---|---|---|---|---|---|---|---|---|
| ¹: weight % based on total dry solids weight of binder | | | | | | | | | | | |

These results show, that a high load of Starch hydrolysate is possible without having to sacrifice the mechanical properties (runs 6, 7, 10 and 11). For a precoat adhesive DL 510 is typically used and for a secondary adhesive DL 520 is typically used. Aim of these experiments was to maximise the starch hydrolysate ratio with a softer elastomer to obtain a Modulus in the range 20 - 850 MPa and an elongation at break of >20% preferably between 300 and 900%.

All of the binders according to the present invention are comparable to if not better than the standard binders DL 510 and DL 520.

### Example 2

The inventors have also investigated the properties of the binders according to the present invention when used in a precoat formulation and a secondary adhesive formulation in a carpet backing.

For this purpose the inventors have prepared six different carpet samples of a standard quality (Greige of polyamide loop pile tufted in woven polyester backing with an Action bac secondary backing, product of Desso Goirle. The carpet backing formulations were as follows, thickener was added to meet a Brookfield BVT viscosity of 4000-6000 with spindle 4 at 20 rpm:

| Precoat formulation: | dry parts |
|---|---|
| Binder | 100 |
| Dispex® N40 | 0.25 |
| Polyron® 332 | 0.25 |
| RX 018 | 0.66 |
| Emulsogen® SF8 | 1.0 |
| Carbocia 80 | 800 |
| RX 810 | to visco 4000-6000 mPa.s |

Total solids of the carpet precoat formulation was 78-79%. The precoat formulation was applied to the greige carpet with a tandem roll coater and dried at 120°C for 12 minutes in a Mathis oven to obtain a final dry coat weight of 800-900 g/m2.

Subsequently the precoat was coated with a secondary adhesive formulation:

| Sec. | Adhesive formulation | dry parts |
|---|---|---|
| | Binder | 100 |
| | Dispex® N40 | 0.25 |
| | Polyron® 332 | 0.25 |
| | Carbocia 80 | 400 |
| | RX 810 | to visco 3000-3500 mPa.s |

The secondary adhesive formulation with a solids content of 79% was foamed in a Hobart mixer for approx. 4 minutes to obtain a froth density of 650-700 g/l. The secondary adhesive formulation was applied to the precoated backing with a tandem roll coater and dried at 120°C for 12 minutes in a Mathis oven to obtain a final dry adhesive coat weight of 650-700 g/m2. Total coat weight (precoat + secondary adhesive) is 1500-1600 g/m2.

The samples were then tested for tuft lock and delamination. Tuft lock or tuft withdrawal force was determined in accordance with ISO 4919-1978 and delamination was tested according to ISO 11857. The results were as follows:

| **Binder** | | **1** | **2** | **3** | **4** | **5** | **6** |
|---|---|---|---|---|---|---|---|
| **Polymer [pbwt]** | DL510 | 100 | | | | | 100 |
| | DL500 | | 70 | 70 | 60 | 60 | |
| **Starch Hydrolysate [pbwt]** | ST235-3 | | 30 | | | | |
| | ST235-9 | | | 30 | 40 | 40 | |
| **Tot.coating weight** | g/m² | 1557 | 1527 | 1522 | 1593 | 1588 | 1634 |
| **Ave. dry tuft lock** | N | 70.0 | 53.0 | 60.8 | 66.3 | 57.5 | 69.5 |
| **Stand. dev.** | | 10.4 | 7.0 | 8.6 | 5.5 | 5.0 | 6.1 |
| **Var. coeff.** | % | 15 | 13 | 14 | 8 | 9 | 9 |
| **Delamination** | N | 9.5 | 30.4 | 21.6 | 39.2 | | |

The above data clearly shows that the binders according to the present invention provide, although lower than reference samples 1 and 6, excellent tuft lock since a tuft lock of 20 N is considered acceptable. The resistance to delamination of the binders according to the present invention exceed significantly reference sample 1.

### Example 3

The inventors have also investigated the properties of the binders according to the present invention with respect to flame retardancy. For this purpose the inventors have prepared 9 different films, along the lines set forth in Example above.

Films were cast from XZ 92227.01. For the reference samples the XZ 92227.01 polymer binder was adjusted with different levels of ATH, subsequently the polymer binder was mixed with Stadex 235-9 Starch hydrolisate or Stadex 235-9 and plasticiser. Finally the polymer binder was mixed with Merifilm 104 Dextrin.

The films were cut in strips of 20x150mm and clamped at 1 side in a film sample holder before the limiting oxygen index (LOI) was measured according to ISO 4589.

| | **STADEX 235-9** | **ATH** | **P-1200** | **P-400** | **Merifilm 104** | **LOI (%O₂)** |
|---|---|---|---|---|---|---|
| 1 | 0 | 0 | | | | 17.0 |
| 2 | 0 | 10 | | | | 17.7 |
| 3 | 0 | 20 | | | | 18.2 |
| 4 | 39.5 | | | | | 18.2 |
| 5 | 40 | | | | | 18.5 |
| 6 | 38 | | | | | 18.5 |
| 7 | 32.5 | | 5.9 | | | 18.6 |
| 8 | 32.5 | | | 5.9 | | 18.6 |
| 9 | | | | | 37.2 | 18.8 |

The first 3 experiments demonstrate the Limiting oxygen index of the base polymer XZ 92227.01 and how the LOI improves upon addition of respectively 10 and 20 weight% ATH based on the total composition of the binder. The binders of our invention provide films equal to or better in LOI than a reference containing 20% ATH.

## Claims

1. Binder comprising water, a polymer and an oligomeric or polymeric starch hydrolysate compound,
**characterised in that**,
said binder when cast as a film has a Young's Modulus of 1 GPa or less and an elongation of 20% or more.

2. Binder according to claim 1, wherein the starch hydrolysate compound is present in an amount of more than 30 weight % based on the dry solids weight of the binder.

3. Binder according to claim 1 or claim 2, wherein the polymer is a flexible crosslinkable and carboxylic acid group-containing polymer or a mixtures thereof.

4. Binder according to claim 3, wherein the polymer is a polymer or a copolymer of butadiene, isoprene, 2,3-dimethyl butadiene and other dienes of 4 to 6 carbon atoms with a copolymerizable unsaturated acid such as acrylic acid, methacrylic acid, ethacrylic acid, sorbic acid, maleic acid, fumaric acid, itaconic acid, vinyl benzoic acid, α-chloro acrylic acid, crotonic acid and the like as well as mixtures thereof.

5. Binder according to any one of the preceding claims,
wherein the starch hydrolysate compound is dextrin and in particular low molecular weight dextrin.

6. Binder according to any one of the preceding claims,
wherein the starch hydrolysate compound is a low molecular weight dextrin having a dextrose equivalent of 1 to 30, preferably 1 to 20 or even 1 to 13.

7. Carpet backing formulation comprising a binder according to any one of the preceding claims and a filler in an amount of up to 1000 parts per hundred parts dry binder solids.

8. Method of making a carpet comprising the step of applying a precoat carpet backing formulation according to any one of claims 1 to 7 onto a greige carpet layer and optionally laminating a secondary backing onto the adhesive formulation layer according to any one of claims 1 to 7.

9. Method according to claim 8, wherein the carpet is tufted, woven or needlefelted.

10. Method according to claim 8, wherein the carpet backing formulation contains a filler in an amount of up to 600 parts per hundred parts dry binder solids, more preferably up to 400 parts per hundred parts dry binder solids, most preferably up to 200 parts per hundred parts dry binder solids and the carpet is a woven or needlefelt carpet.

11. Use according to claim 8, wherein the carpet backing formulation is a precoat containing a filler in an amount of 500 to 1000 parts per hundred parts dry binder solids, more preferably 600 to 850 parts per hundred parts dry binder solids and the carpet is a tufted carpet.

12. Method according to claim 8 or 11, wherein the carpet backing formulation is a secondary adhesive containing a filler in an amount of 200 to 500 parts per hundred parts dry binder solids, more preferably 250 to 400 parts per hundred parts dry binder solids and the carpet is a tufted carpet

13. Carpet obtainable according to any one of claims 8 to 12.

14. Use of a carpet backing formulation according to any one of the preceding claims as an adhesive.

15. Use according to claim 14, wherein the adhesive is used for laminating a carpet secondary backing onto a carpet backing layer.
